# EUROPEAN PATENT APPLICATION

(11) **EP 4 645 243 A1**
(43) Date of publication of application: **05.11.2025**
(21) Application number: 23912739.2
(22) Date of filing: 19.12.2023
(51) Int. Cl.: G06T 19/20, G06T 5/50, G01S 17/89, G01S 17/86, G06T 17/00

(54) **ELECTRONIC DEVICE AND METHOD FOR CALIBRATING POINT CLOUD FOR THREE-DIMENSIONAL SPACE**

(30) Priority: 28.12.2022 KR 20220187653; 03.11.2023 KR 20230150550
(71) Applicant: Seoul Robotics Co., Ltd., Seoul 06649 (KR)
(72) Inventor: TRUONG, Hong Minh, Seongnam-si Gyeonggi-do 13532 (KR); JONSSON, Thorsteinn Baldvin, Seoul 03902 (KR); NASYPANYI, Oleksii, Seoul 06244 (KR)
(74) Representative: Lewis Silkin LLP
(86) International application number: PCT/KR2023/020990
(87) International publication number: WO 2024/144064

(57) **Abstract**

An electronic device includes a communication circuit, an input device, at least one processor, and at least one memory. The at least one processor stores instructions, and the instructions are configured to obtain a first point cloud for a three-dimensional space from a first sensing device among a plurality of sensing devices, obtain a second point cloud for the three-dimensional space from a second sensing device among the plurality of sensing devices, select at least two first reference points from the first point cloud based on a user input, select at least two second reference points from the second point cloud based on the user input, and align the first point cloud and the second point cloud based on the at least two first reference points and the at least two second reference points.

## Description

### BACKGROUND OF THE INVENTION

### TECHNICAL FIELD

Exemplary embodiments of the present invention relate to an electronic device and method for aligning a point cloud to a three-dimensional space.

### DISCUSSION OF THE RELATED ART

Recently, technologies that detect three-dimensional space using 3D sensors and generate data about the three-dimensional space based on this are being used in various industrial technology fields. LiDAR (Light Detection And Ranging), one of the 3D sensors, is a sensor that obtains information about 3D space by emitting light to an object in 3D space and then receiving the reflected light. For example, the LiDAR sensor may detect the distance to objects in three-dimensional space and various physical properties, so it may be used in autonomous driving technology.

Since there is a physical limit to the sensing area that a single sensing device may sense, multiple sensing devices must be appropriately placed for wide spaces. Based on data received from the multiple sensing devices, information about a wide space may be obtained. When multiple pieces of information about the three-dimensional space are acquired using multiple Lidar sensors, it is important to perform precise alignment between the multiple pieces of information.

### SUMMARY

According to exemplary embodiments of the present invention, a technical solution is to perform calibration between 3D point clouds without a pre-mapping process.

In addition, according to exemplary embodiments of the present invention, a technical solution is to reduce waste of computational resources and computational delay by aligning 3D point clouds without using 3D maps (e.g. HD Map).

In addition, according to exemplary embodiments of the present invention, a technical solution is perform alignment between three-dimensional point clouds with simple operations without requiring the user to set parameters such as orthogonal coordinates (e.g. x, y, z axes) or three-axis rotational movements (e.g. pitch, yaw, roll).

According to one aspect of the present invention, the electronic device includes a communication circuit, an input device, at least one processor, and at least one memory. The at least one processor stores instructions, and the instructions are configured to obtain a first point cloud for a three-dimensional space from a first sensing device among a plurality of sensing devices, obtain a second point cloud for the three-dimensional space from a second sensing device among the plurality of sensing devices, select at least two first reference points from the first point cloud based on a user input, select at least two second reference points from the second point cloud based on the user input, and align the first point cloud and the second point cloud based on the at least two first reference points and the at least two second reference points.

In an exemplary embodiment, the instructions may be configured to cause the one or more processors to align the at least two first reference points and the at least two second reference points based on a predetermined point in time, and to align the first point cloud and the second point cloud based on the aligned at least two first reference points and the at least two second reference points.

In an exemplary embodiment, the instructions may be configured to cause the one or more processors to based on user input, determine the first sensing device as a reference sensing device and the second sensing device as a target sensing device to be corrected, and to align the at least two first reference points and the at least two second reference points based on a predetermined point in time by rotating or translating the second point cloud about three mutually orthogonal rotation axes based on the first point cloud.

In an exemplary embodiment, the instructions may be configured to cause the one or more processors to determine an overlap area between the first point cloud and the aligned second point cloud, to determine a first point of the first point cloud and a second point of the second point cloud corresponding to the first point in the overlap area, wherein a distance between the first point and the second point is shorter than a predetermined distance, to calculate a position vector between the first point and the second point, and to perform fine alignment between the first point cloud and the aligned second point cloud based on the position vector.

In an exemplary embodiment, wherein the instructions may be configured to cause the one or more processors to calculate a position vector between the first point and the second point based on the position coordinates of the first point and the position coordinates of the second point in a three-dimensional space coordinate system.

In an exemplary embodiment, at least two landmarks may be placed in the three-dimensional space. The instructions may be configured to cause the one or more processors to select locations of the at least two landmarks included in the first point cloud as the at least two first reference points, and to select locations of the at least two landmarks included in the second point cloud as the at least two second reference points.

In an exemplary embodiment, each of the above at least two landmarks may be an object or a portion of the object.

In an exemplary embodiment, each of the sensing devices may include a Lidar sensor capable of obtaining a point cloud for the three-dimensional space.

In an exemplary embodiment, the electronic device may further include a display. The instructions may be configured to cause the one or more processors to display the aligned first point cloud and the second point cloud through the display, in response to completion of alignment of the first point cloud and the second point cloud.

In an exemplary embodiment, the electronic device may further include a display. The instructions may be configured to cause the one or more processors to display the aligned first point cloud and the second point cloud through the display, in response to completion of alignment of the first point cloud and the second point cloud.

According to another aspect of the present invention, the method includes obtaining a first point cloud for the three-dimensional space from a first sensing device among a plurality of sensing devices, obtaining a second point cloud for the three-dimensional space from a second sensing device among the plurality of sensing devices, selecting at least two first reference points from the first point cloud based on a user input, selecting at least two second reference points corresponding to the at least two first reference points selected from the first point cloud from the second point cloud based on a user input, and aligning the first point cloud and the second point cloud based on the at least two first reference points and the at least two second reference points.

In an exemplary embodiment, the aligning may include aligning the at least two first reference points and the at least two second reference points based on a predetermined point in time, and aligning the first point cloud and the second point cloud based on the aligned at least two first reference points and the at least two second reference points.

In an exemplary embodiment, the method may further include determining the first sensing device as a reference sensing device and the second sensing device as a target sensing device to be compensated based on user input is performed, after acquiring the second point cloud. The aligning may further include aligning at least two first reference points and at least two second reference points at a predetermined point in time by rotating or translating the second point cloud around three mutually orthogonal rotation axes based on the first point cloud.

In an exemplary embodiment, the aligning may further include checking an overlapping area between the first point cloud and the aligned second point cloud, selecting a first point of the first point cloud and a second point of the second point cloud corresponding to the first point in the overlapping area, wherein a distance between the first point and the second point is shorter than a predetermined distance, calculating a position vector between the first point and the second point, and performing fine alignment between the first point cloud and the aligned second point cloud based on the position vector.

In an exemplary embodiment, the calculation may include calculating a position vector between the first point and the second point based on the position coordinates of the first point and the position coordinates of the second point in a three-dimensional space coordinate system.

In an exemplary embodiment, at least two landmarks may be arranged in the three-dimensional space. The selecting the at least two first reference points is selecting the positions of the at least two landmarks included in the first point cloud as the at least two first reference points, and the selecting the at least two second reference points is selecting the positions of the at least two landmarks included in the second point cloud as the at least two second reference points.

In an exemplary embodiment, each of the at least two landmarks may be an object or a portion of the object.

In an exemplary embodiment, each of the sensing devices may include a Lidar sensor capable of obtaining a point cloud for the three-dimensional space.

In an exemplary embodiment, the method may further include displaying the first point cloud and the second point cloud through a display.

In an exemplary embodiment, the method may further include displaying the aligned first point cloud and the second point cloud through a display, in response to the completion of the alignment of the first point cloud and the second point cloud.

According to some exemplary embodiments of the present invention, calibration between the 3D point clouds may be performed without a pre-mapping process.

In addition, by matching the 3D point clouds without using the 3D maps (e.g. HD Map), waste of computational resources and computational delay may be reduced.

In addition, without the user having to set parameters such as Cartesian coordinate system (e.g. x, y, z axis) or 3-axis rotational motion (e.g. pitch, yaw, roll), alignment between the 3D point clouds may be performed with simple operations.

### BRIEF DESCRIPTION OF THE DRAWINGS

FIG. 1 is a diagram illustrating a system according to an example embodiment of the present invention;
FIG. 2 is a block diagram illustrating an electronic device and a sensing device of the system;
FIG. 3 is a diagram illustrating a method for detecting a three-dimensional space using a plurality of sensing devices according to an example embodiment of the present invention;
FIG. 4 is a flowchart of an example operation of the electronic device;
FIG. 5 is a diagram illustrating a method for detecting a three-dimensional space using a plurality of sensing devices according to an example embodiment of the present invention;
FIG. 6 is a flowchart of an example operation of the electronic device;
FIG. 7 is an image of a program that provides various information about a three-dimensional space in an example embodiment of the present invention;
FIG. 8 is an image illustrating a first point cloud obtained from a first sensing device determined as a reference sensing device and a second point cloud obtained from a second sensing device determined as a target sensing device to be corrected in an example embodiment of the present invention;
FIG. 9 is an image illustrating a first point cloud obtained from a first sensing device determined as a reference sensing device and a second point cloud obtained from a second sensing device determined as a target sensing device to be corrected in an example embodiment of the present invention;
FIG. 10 is an image illustrating a first point cloud and a second point cloud that have been aligned according to in an example embodiment of the present invention; and
FIG. 11 is a flowchart of an example operation of the electronic device.

### DETAILED DESCRIPTION OF THE INVENTION

The embodiments of the present disclosure are exemplified for the purpose of explaining the technical idea of the present disclosure. The scope of rights according to the present disclosure is not limited to the embodiments presented below or the specific description of these embodiments.

All technical and scientific terms used in this disclosure, unless otherwise defined, have the meaning commonly understood by a person of ordinary skill in the art to which this disclosure belongs. All terms used in this disclosure have been selected for the purpose of more clearly explaining this disclosure and are not selected to limit the scope of rights under this disclosure.

The expressions "including," "comprising," "having," etc., used in this disclosure are to be understood as open-ended terms that imply the possibility of including other embodiments, unless otherwise stated in the phrase or sentence in which the expression is included.

The singular expressions described in this disclosure may include the plural meaning unless otherwise stated, and this also applies to the singular expressions described in the claims. The expressions "first", "second", etc. used in this disclosure are used to distinguish plural components from each other, and do not limit the order or importance of the components.

The term "part" as used in this disclosure means software or hardware components such as a field-programmable gate array (FPGA), an application specific integrated circuit (ASIC). However, the "part" is not limited to hardware and software. The "part" may be configured to be on an addressable storage medium, and may be configured to execute one or more processors. Thus, by way of example, the "part" includes components such as software components, object-oriented software components, class components, and task components, as well as processors, functions, properties, procedures, subroutines, segments of program code, drivers, firmware, microcode, circuitry, data, databases, data structures, tables, arrays, and variables. The functionality provided within a component and a "part" may be combined into a smaller number of components and "parts" or further separated into additional components and "parts."

The expression "based on" as used in this disclosure is used to describe one or more factors that influence the decision, act of judgment, or action described in the phrase or sentence containing the expression, and this expression does not exclude additional factors that influence the decision, act of judgment, or action.

In this disclosure, when a component is referred to as being "connected" or "connected" to another component, it should be understood that the component may be directly connected or connected to the other component, or may be connected or connected via a new other component.

Hereinafter, example embodiments of the present invention will be described with reference to the attached drawings. In the attached drawings, identical or corresponding components are given the same reference numerals. In addition, in the description of the embodiments below, redundant description of identical or corresponding components may be omitted. However, even if the description of a component is omitted, it is not intended that such a component is not included in any embodiment.

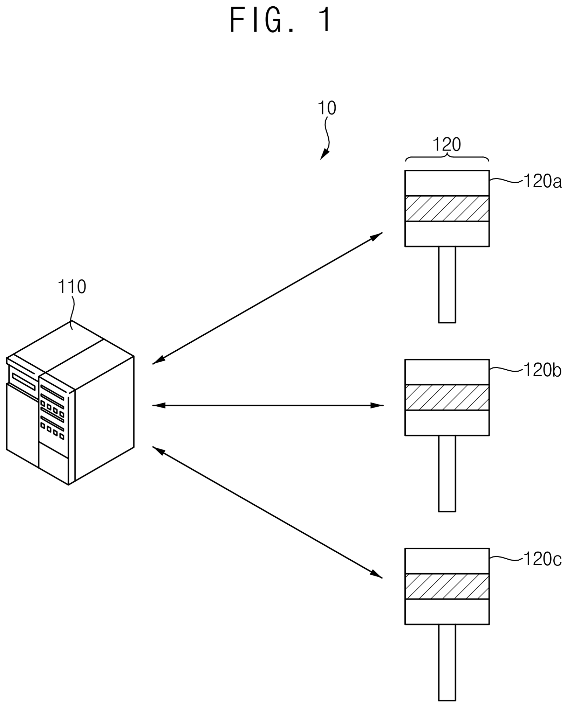

FIG. 1 is a diagram illustrating a system 10 according to an example embodiment of the present invention. The system 10 may include an electronic device 110 and a plurality of sensing devices 120. The electronic device 110 may be connected to the plurality of sensing devices 120 to transmit and receive various data. In this drawing, it is assumed that the plurality of sensing devices 120 are three (e.g., a first sensing device 120a, a second sensing device 120b, and a third sensing device 120c), but the number of the plurality of sensing devices 120 is not limited thereto.

The sensing device 120 according to various embodiments may be a device capable of obtaining a point cloud as spatial information for a three-dimensional space. The sensing device 120 may obtain a point cloud for a three-dimensional space by emitting light into a three-dimensional space and receiving light reflected by an object. The sensing device 120 may include at least one sensor. The point cloud may mean a set cloud of multiple points spread over a three-dimensional space. The point cloud may also be called, for example, a set of points, a point cloud, or point cloud data. Unlike a two-dimensional image, the point cloud is data capable of three-dimensional modeling because it includes depth (z-axis) information.

The sensing device 120 according to various embodiments may obtain a time-series point cloud for the three-dimensional space. The sensing device 120 may obtain the point cloud for the three-dimensional space by time or at a predetermined time interval (e.g., 0.1 s), and may obtain the time-series point cloud accordingly.

The sensing device 120 according to various embodiments may be installed in a place where it may detect the three-dimensional space, either indoors or outdoors. In order to monitor a wide three-dimensional space, the plurality of sensing devices 120 may be installed considering a detection area according to a range that a sensor included in the sensing device may detect. For example, the plurality of sensing devices 120 may be installed at a certain interval from each other. For example, each of the plurality of sensing devices 120 may be distributed and placed at a location where it may detect the three-dimensional space from different directions. For example, each of the plurality of sensing devices 120 may be distributed and placed at a location where it may detect an area of the three-dimensional space.

The sensing device 120 is a 3D sensor that detects a 3D space and may include a LiDAR (Light Detection And Ranging) sensor. The sensing device including the LiDAR sensor may obtain a volumetric point cloud for the 3D space. The LiDAR sensor may detect the shape, size, and position of objects included in the 3D space. A multi-channel LiDAR sensor that may collect information about the 3D space is suitable for a field that may utilize the approximate shape, size, and volume of an object.

The sensing device 120 may further include various types of sensors, such as, for example, a radar sensor, an infrared sensor, and a camera (image sensor). The sensing device 120 may include multiple sensors of the same type, or may use a combination of different types of sensors, considering the types of sensors it includes. The types of sensors described above are exemplary and are not limited thereto.

The electronic device 110 according to various embodiments may be a server device that operates a service providing three-dimensional information about a three-dimensional space. The electronic device 110 may also be implemented with cloud computing technology. The electronic device 110 may be connected to the plurality of sensing devices 120 to obtain the point cloud about the three-dimensional space from the plurality of sensing devices 120. The electronic device 110 may provide a customer with three-dimensional information about the three-dimensional space by using the point cloud obtained from the plurality of sensing devices 120. The customer may use the corresponding service by using the customer's terminal device (not shown). For example, a customer may install multiple sensing devices 120 in a place where they may detect a three-dimensional space that they want to monitor. The multiple sensing devices 120 may transmit the point cloud for the three-dimensional space to the electronic device 110. The electronic device 110 may model three-dimensional information for the three-dimensional space using the point cloud acquired from the multiple sensing devices 120. The electronic device 110 may transmit three-dimensional information for the three-dimensional space to the customer's terminal device. The customer may receive various services provided by the electronic device 110 through the customer's terminal device.

Since the detection area that may be sensed by the single sensing device 120 is limited, in order to monitor a wide three-dimensional space, the multiple sensing devices 120 must detect each area included in the three-dimensional space. In the above case, in order to obtain three-dimensional information about the entire three-dimensional space, it is important to precisely align (calibrate) the point clouds acquired by each of the multiple sensing devices 120 into a single data. For example, if the point clouds are not accurately aligned by the multiple sensing devices 120, an error may occur in which each of the multiple sensing devices 120 recognizes a single object as a different object.

In general, in order to align multiple point clouds, it is necessary to know orthogonal coordinate system information (3-axis (e.g., x, y, z-axis) coordinate information) and 3-axis rotational motion information (e.g., pitch, yaw, roll information). For example, since a point cloud contains 3D information, the pitch, yaw, or roll values of the multiple point clouds may be different depending on the direction in which each of the multiple sensing devices 120 views the 3D space. Therefore, unless you are an expert with a high level of understanding of point clouds, it may be very difficult to perform alignment between point clouds.

In addition, in order to align multiple point clouds, each of the multiple point clouds may be mapped to the 3D map information based on the 3D map information. For example, by obtaining HD map information for the 3D space in advance (e.g., satellite information for the 3D space) and mapping each point cloud to the map information, the multiple point clouds may be aligned with each other. In this case, since the 3D map information must be used for precise alignment, a lot of computational resources may be required for the mapping process. In addition, when using the 3D map information, the time required to process many computations may increase.

In the present example embodiment, a method for performing calibration between three-dimensional point clouds without a pre-mapping process is disclosed. The specific calibration method will be described later.

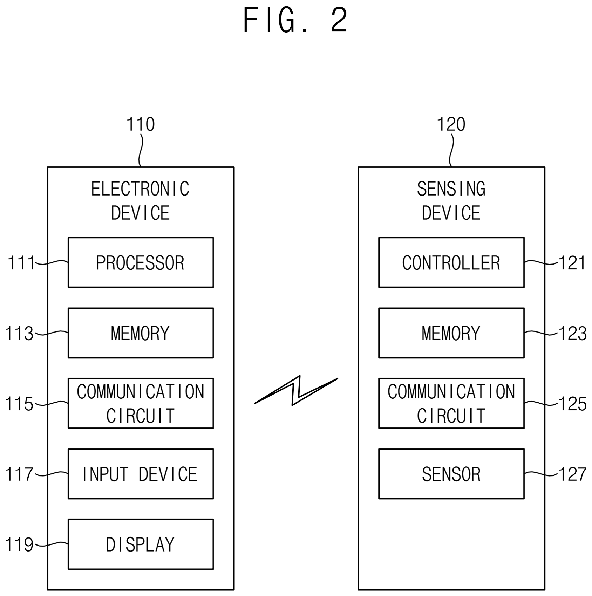

FIG. 2 is a block diagram illustrating an electronic device and a sensing device of the system.

Referring to FIG. 2, the electronic device 110 may include one or more processors 111, one or more memories 113, a communication circuit 115, an input device 117, and a display 119. Some of the components of the illustrated electronic device 110 may be omitted or replaced. Additionally or alternatively, some of the components may be implemented by integration, or may be implemented as a single or multiple entities. The expression "processor 111" may mean a set of one or more processors 111, unless explicitly stated otherwise in the context. The expression "memory 113" may mean a set of one or more memories 113, unless explicitly stated otherwise in the context. At least some components within the electronic device 110 may be connected to each other via a bus, a general purpose input/output (GPIO), a serial peripheral interface (SPI), or a mobile industry processor interface (MIPI), and may exchange data and/or signals.

The processor 111 of the electronic device 110 may perform calculations or data processing related to control and/or communication of each component of the electronic device 110. The processor 111 may be operatively connected to, for example, components of the electronic device 110. The processor 111 may store commands or data received from other components of the electronic device 110 in the memory 113 of the electronic device 110, load the commands or data stored in the memory 113, process them, and store the resulting data back in the memory 113. The memory 113 may store instructions for the operation of the processor 111.

The memory 113 of the electronic device 110 may store various information. The memory 113 may store basic information about a plurality of sensing devices 120. The memory 113 may store a plurality of point clouds obtained from a plurality of sensing devices 120.

The communication circuit 115 of the electronic device 110 may establish a wired or wireless communication channel with an external device (e.g., a plurality of sensing devices 120) and transmit and receive various data with the external device. According to one embodiment, the communication circuit 115 may include at least one port for connecting to the external device with a wired cable in order to communicate with the external device by wire. In the above case, the communication circuit 115 may perform communication with the external device connected by wire through at least one port. According to one embodiment, the communication circuit 115 may be configured to be connected to a cellular network (e.g., 3G, LTE, 5G, Wibro or Wimax) by including a cellular communication module. According to various embodiments, the communication circuit 115 may transmit and receive data with the external device by using a short-range communication (e.g., Wi-Fi, Bluetooth, Bluetooth Low Energy (BLE), UWB), but is not limited thereto.

An input device 117 of an electronic device 110 may receive commands or data to be used in a component of the electronic device 110 (e.g., a processor 111) from an external source (e.g., a user) of the electronic device 110. The input device 117 may include, for example, a mouse, a microphone, or a keyboard.

The display 119 of the electronic device 110 may display various screens based on the control of the processor 111. The display 119 may be, for example, a monitor. The display 119 may be implemented in various ways, such as, for example, an LCD (Liquid Crystal Display), an OLED (Organic Light Emitting Diodes) display 119, an AM-OLED (Active-Matrix Organic Light-Emitting Diode), and a PDP (Plasma Display Panel). According to one embodiment, the display 119 may be implemented in the form of a touch sensor panel (TSP) that may recognize contact or proximity (for example, hovering) of various external objects.

The sensing device 120 may include a controller 121, a memory 123, a communication circuit 125, and at least one sensor 127. Some of the configurations of the illustrated sensing device 120 may be omitted or replaced. Additionally or alternatively, some of the components may be implemented as an integrated unit or implemented as a single or multiple units. The expression "sensor 127" may mean a set of one or more sensors 127, unless explicitly expressed otherwise in the context.

The controller 121 of the sensing device 120 may perform operations or data processing related to control and/or communication of each component of the sensing device 120. The controller 121 may be operatively connected to, for example, components of the sensing device 120. The controller 121 may store commands or data received from other components of the sensing device 120 in the memory 123 of the sensing device 120, load the commands or data stored in the memory 123, process them, and store the resulting data back in the memory 123. The memory 123 may store instructions for the operation of the sensing device 120. The controller 121 of the sensing device 120 may execute a program installed in the sensing device 120. The controller 121 may control a processing module that executes a program that detects three-dimensional space.

The sensor 127 of the sensing device 120 may be a sensor 127 for detecting a three-dimensional space. The sensor 127 may include a light emitting unit that emits light in a three-dimensional space and a light receiving unit that receives light reflected from an object, and may further include a dedicated controller 121 that obtains a point cloud for a three-dimensional space based on the intensity of light received by the light receiving unit. The sensor 127 may obtain a time-series (or time-dependent) point cloud for a three-dimensional space in order to track an object located in a three-dimensional space within a detection area. The sensor 127 may be a Lidar sensor, and may obtain data for a specific range of space, including a three-dimensional Lidar sensor. Depending on the environment, the sensor 127 may further include various types of sensors, such as a radar sensor, an infrared sensor, an ultrasonic sensor, and a camera.

The communication circuit 125 of the sensing device 120 may establish a wired or wireless communication channel with an external device (e.g., an electronic device 110) and transmit and receive various data with the external device. According to one embodiment, the communication circuit 125 may include at least one port for connecting to the external device with a wired cable in order to communicate with the external device by wire. In the above case, the communication circuit 125 may perform communication with the external device connected by wire through at least one port. According to one embodiment, the communication circuit 125 may be configured to be connected to a cellular network (e.g., 3G, LTE, 5G, Wibro or Wimax) by including a cellular communication module. According to various embodiments, the communication circuit 125 may transmit and receive data with the external device by using a short-range communication (e.g., Wi-Fi, Bluetooth, Bluetooth Low Energy (BLE), UWB), but is not limited thereto.

The sensor 127 of the sensing device 120 may further include a position sensor (e.g., a GPS sensor) in addition to the above-described Lidar sensor. In addition, the sensing device 120 may further include components for improving sensing performance depending on the installation environment of the sensing device 120. The controller 121 of the sensing device 120 according to various embodiments may operate the sensor 127 by executing one or more instructions stored in the memory 123, thereby obtaining a point cloud for a three-dimensional space, and transmit the point cloud for the three-dimensional space to the electronic device 110 through the communication circuit 125. The sensing device 120 may transmit information (e.g., ID information) that may identify the sensing device 120 together with the point cloud for the three-dimensional space.

The processor 111 of the electronic device 110 may generate three-dimensional information about the three-dimensional space by three-dimensionally modeling the structure of the three-dimensional space based on point clouds received from a plurality of sensing devices 120. The processor 111 may perform a series of operations for detecting an object in the three-dimensional space and monitoring the three-dimensional space based on the point cloud for the three-dimensional space. The electronic device 110 may receive point clouds for the three-dimensional space from each of the plurality of sensing devices 120 and perform an operation for aligning the plurality of point clouds for the three-dimensional space.

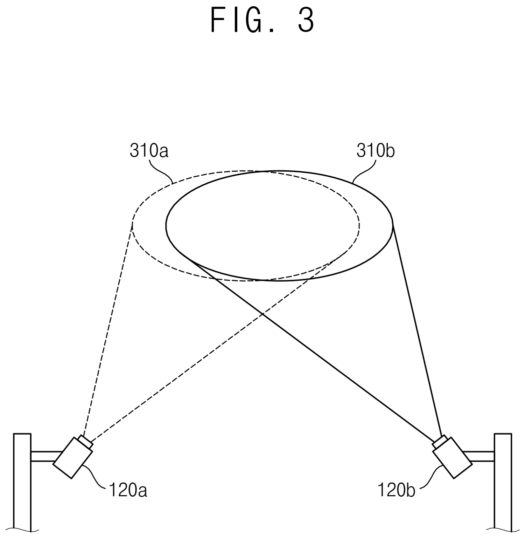

FIG. 3 is a diagram illustrating a method for detecting a three-dimensional space using a plurality of sensing devices according to an example embodiment of the present invention.

Referring to FIG. 3, a plurality of sensing devices 120 according to various embodiments may be arranged at a predetermined distance apart from each other in order to detect a three-dimensional space. In this drawing, it is assumed that there are two sensing devices 120, but the number of sensing devices 120 is not limited thereto. The first sensing device 120a may obtain a first point cloud for a three-dimensional space within a first sensing area 310a, and the second sensing device 120b may obtain a second point cloud for a three-dimensional space within a second sensing area 310b. The first sensing device 120a may transmit the obtained first point cloud to an electronic device 110, and the second sensing device 120b may transmit the obtained second point cloud to an electronic device 110. The sensing device 120 may have a predetermined field of view and detection limit distance depending on the type of sensor, and accordingly, a sensing area capable of detecting an object in a three-dimensional space may be determined.

Since the first sensing device 120a and the second sensing device 120b sense the three-dimensional space from different directions, the first point cloud and the second point cloud may not be aligned with each other. For example, for an object placed in a three-dimensional space, the shape of the object included in the first point cloud and the shape of the object included in the second point cloud may differ due to the difference in the direction in which they sense each other. That is, even if the plurality of sensing devices 120 senses the same three-dimensional space, they may obtain different point clouds depending on the positions where the sensing devices 120 are placed. If the first point cloud and the second point cloud are not aligned with each other, the electronic device 110 may misrecognize the same object as different objects. Therefore, it is important for the electronic device 110 to accurately align the first point cloud and the second point cloud with each other.

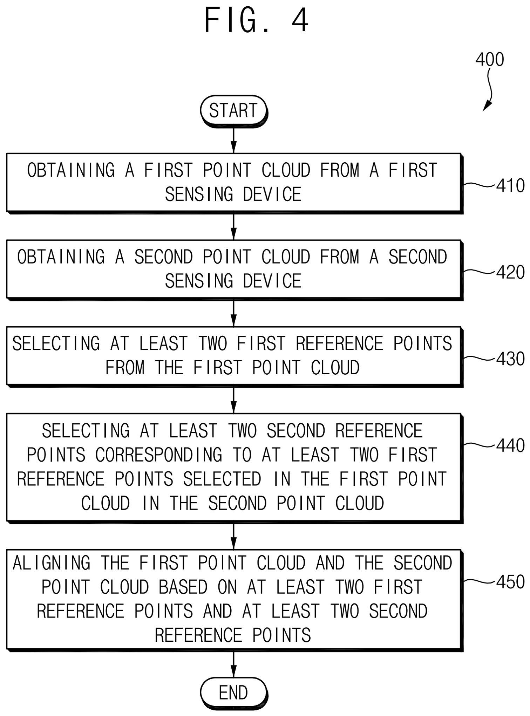

FIG. 4 is a flowchart of an example operation of the electronic device. Specifically, FIG. 4 is a flowchart of operations regarding reference point adjustment (or landmark tuning) among two adjustments included in a 3D point cloud alignment method performed in an electronic device 110.

Referring to the operation flow diagram 400, the processor 111 of the electronic device 110 according to various embodiments may, in operation 410, obtain a first point cloud for a specific point in time for a three-dimensional space from a first sensing device 120a among a plurality of sensing devices 120. The processor 111 may receive the first point cloud for the three-dimensional space from the first sensing device 120a through the communication circuit 115. The first sensing device 120a may continuously sense the three-dimensional space using a sensor, thereby obtaining a time-series (time-based) point cloud including the first point cloud for the three-dimensional space at a specific point in time. The first sensing device 120a may transmit a first point cloud for a three-dimensional space to an electronic device 110, and the electronic device 110 may obtain a first point cloud for a three-dimensional space from the first sensing device 120a.

The processor 111 according to various embodiments may, in operation 420, obtain a second point cloud for a specific point in time for a three-dimensional space from the second sensing device 120b among the plurality of sensing devices 120. Here, the first point cloud and the second point cloud may be obtained at the same specific point in time. The processor 111 may receive the second point cloud for the three-dimensional space from the second sensing device 120b through the communication circuit 115. The second sensing device 120b may obtain a time-series point cloud including the second point cloud for the three-dimensional space at a specific point in time by continuously sensing the three-dimensional space using the sensor. The second sensing device 120b may transmit a second point cloud for a three-dimensional space to the electronic device 110, and the electronic device 110 may obtain a second point cloud for a three-dimensional space from the second sensing device 120b. The second sensing device 120b may be placed at a location that is a certain distance away from the location where the first sensing device 120a is placed.

The processor 111 according to various embodiments may, at operation 430, select at least two first reference points from the first point cloud based on a user input. The processor 111 may receive a user input for selecting at least two first reference points from the first point cloud through an input device 117. For example, the user may click at least two first reference points from the first point cloud displayed on the display 119 through an input device 117 (e.g., a mouse).

The processor 111 according to various embodiments may, in operation 440, select at least two second reference points corresponding to at least two first reference points selected from the first point cloud in the second point cloud based on the user input. In the present disclosure, the meaning of corresponding may mean that points in each of the different point clouds point to the same point in the real world (the actual world). In other words, the second reference point corresponding to the first reference point means that the point pointed to by the first reference point in the real world and the point pointed to by the second reference point in the real world are the same. The processor 111 may receive a user input for selecting at least two second reference points in the second point cloud through the input device 117. For example, the user may click at least two second reference points in the second point cloud displayed through the display 119 through the input device 117.

The processor 111 according to various embodiments may, in operation 450, align the first point cloud and the second point cloud based on at least two first reference points and at least two second reference points. The processor 111 may align the at least two first reference points and the at least two second reference points based on a predetermined point in time. The processor 111 may align the first point cloud and the second point cloud based on the aligned at least two first reference points and at least two second reference points.

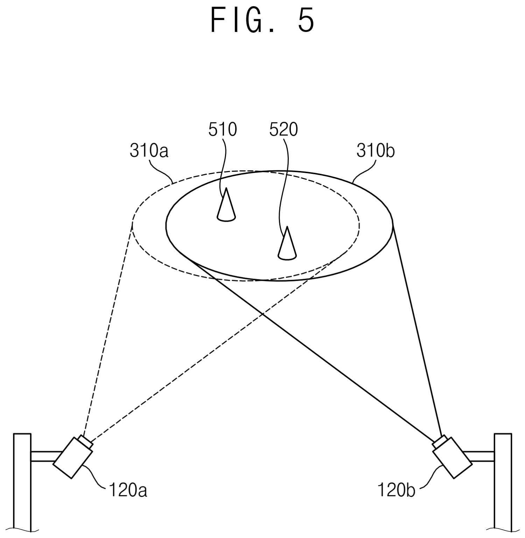

FIG. 5 is a diagram illustrating a method for detecting a three-dimensional space using a plurality of sensing devices according to an example embodiment of the present invention. Any repetitive explanation explained in FIG. 3 will be omitted.

Referring to FIG. 5, a plurality of sensing devices 120 according to various embodiments may be arranged at a predetermined distance apart from each other in order to detect a three-dimensional space. The first sensing device 120a may obtain a first point cloud for a three-dimensional space within a first sensing area 310a, and the second sensing device 120b may obtain a second point cloud for a three-dimensional space within a second sensing area 310b. The first sensing device 120a may transmit the obtained first point cloud to an electronic device 110, and the second sensing device 120b may transmit the obtained second point cloud to the electronic device 110. The sensing device may have a predetermined field of view and detection limit distance depending on the type of sensor, and accordingly, a sensing area capable of detecting an object within a three-dimensional space may be determined.

In order to precisely align the first point cloud and the second point cloud, it is important for the user to accurately select at least two first reference points and at least two second reference points. To this end, at least two landmarks 510 and 520 may be placed in the three-dimensional space, particularly in the first sensing area 310a and the second sensing area 310b. For example, each of the at least two landmarks 510 and 520 may be an object or a part of an object. In the above case, the shapes of the at least two landmarks 510 and 520 may be included in the first point cloud and the second point cloud. The landmarks 510 and 520 may be characteristic objects implemented in shapes that the user may easily identify. For example, the landmarks 510 and 520 may be cone-shaped objects. For example, a landmark could be a corner of an object. This allows the user to accurately select at least two second reference points corresponding to at least two first reference points.

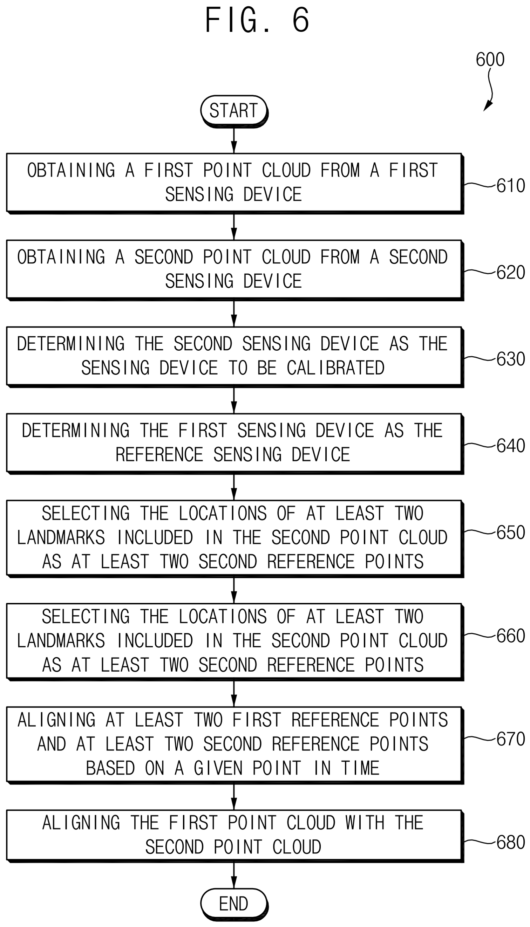

FIG. 6 is a flowchart of an example operation of the electronic device. Any repetitive explanation explained in FIG. 4 will be omitted. Specifically, FIG. 6 is a flow chart of operations for base point adjustment using an actual landmark performed in an electronic device 110.

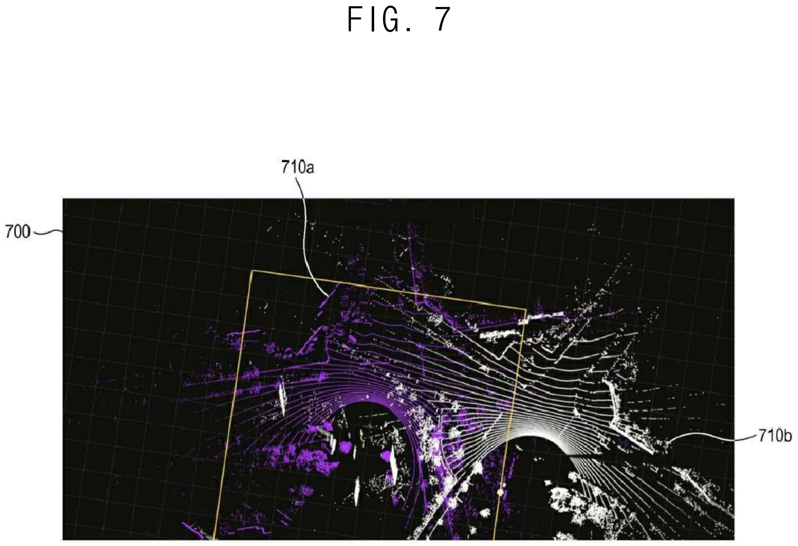

Referring to the operation flow diagram 600, the processor 111 of the electronic device 110 according to various embodiments may obtain a first point cloud from a first sensing device 120a among a plurality of sensing devices 120 at operation 610. The processor 111 according to various embodiments may obtain a second point cloud from a second sensing device 120b at operation 620. The processor 111 may display the first point cloud and the second point cloud through the display 119. FIG. 7 is a screen 700 of a program that provides various information on the three-dimensional space. The screen 700 may display a first point cloud 710a and a second point cloud 710b for a three-dimensional space. The first point cloud 710a and the second point cloud 710b may be expressed differently so that a user may easily distinguish them. For example, the processor 111 may display the first point cloud 710a and the second point cloud 710b in different colors through the display 119. In the screen 700 shown in FIG. 7, the first point cloud 710a and the second point cloud 710b are not aligned with each other.

The processor 111 according to various embodiments may determine the second sensing device 120b as a calibration target sensing device based on a user input at operation 630. The user may determine the second sensing device 120b as a calibration target sensing device by selecting the second point cloud among the first point cloud and the second point cloud displayed on the display 119 through the input device 117. In FIG. 7, the user may determine the second sensing device 120b as a calibration target sensing device by selecting the second point cloud 710b acquired from the second sensing device 120b as the calibration target data. In this case, in order to easily recognize that the selection of the calibration target data is complete, the second point cloud 710b selected as the calibration target data may be changed to a different color.

The processor 111 according to various embodiments may determine the first sensing device 120a as a reference sensing device based on a user input at operation 640. The user may determine the first sensing device 120a as a reference sensing device by selecting the first point cloud 710a acquired from the first sensing device 120a as reference data. Operations 630 and 640 may be implemented without any problem even if their order is changed.

The processor 111 according to various embodiments may, in operation 650, select the positions of at least two landmarks included in the first point cloud as at least two first reference points based on the user input. In one embodiment, as described above, at least two landmarks may be placed in the three-dimensional space. In this case, the user may select the positions of at least two landmarks included in the first point cloud as at least two first reference points through the input device 117. Placing landmarks is optional, not essential, and the user may select at least two first reference points in the first point cloud without landmarks. For example, the user may select at least two unique terrain features that are easy for the user to identify as at least two first reference points in the first point cloud.

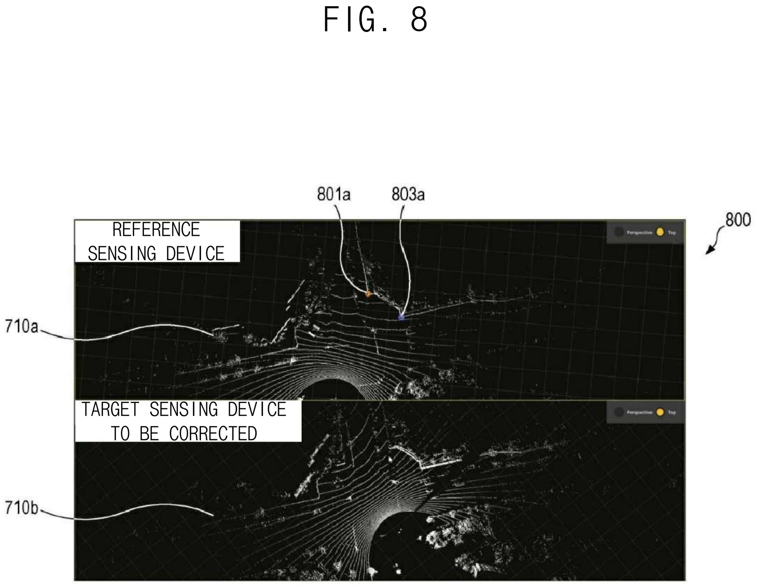

FIG. 8 is a drawing illustrating a first point cloud 710a acquired from a first sensing device 120a determined as a reference sensing device and a second point cloud 710b acquired from a second sensing device 120b determined as a target sensing device to be corrected. A user may select at least two first reference points 801a and 803a from the first point cloud 710a through an input device 117. For example, a user may select the positions of at least two landmarks from the first point cloud 710a as at least two first reference points 801a and 803a, or may select at least two first reference points 801a and 803a based on a terrain feature having a unique shape from the first point cloud 710a. That is, the processor 111 may select at least two first reference points 801a and 803a from the first point cloud 710a based on the user input. In other words, the user may select at least two first reference points 801a and 803a from the first point cloud 710a for alignment without a pre-mapping process.

Returning to FIG. 6 again, the processor 111 according to various embodiments may, at operation 660, select the positions of at least two landmarks included in the second point cloud as at least two second reference points based on user input. The user may select the positions of at least two landmarks included in the second point cloud as at least two second reference points through the input device 117. Since the at least two landmarks exist at specific positions within the real three-dimensional space, if at least two landmarks are used, the second reference point corresponding to the first reference point may be easily and accurately selected.

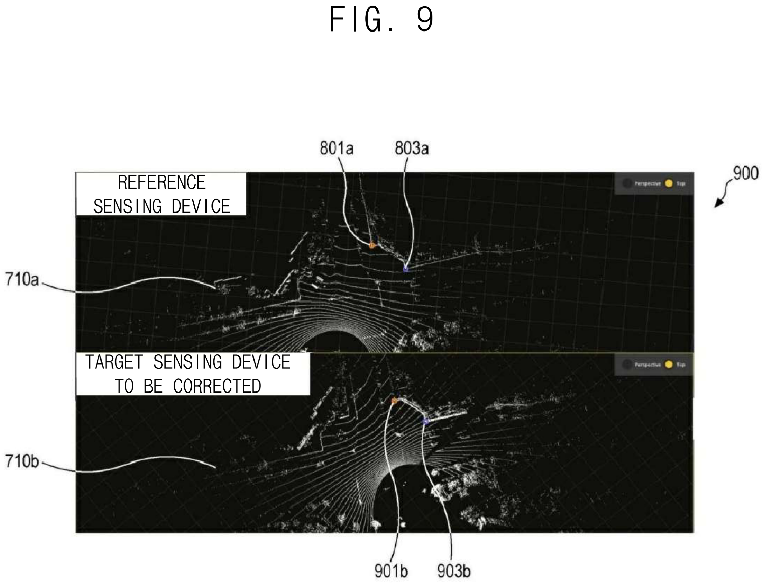

FIG. 9 is a drawing illustrating a first point cloud 710a acquired from a first sensing device 120a determined as a reference sensing device and a second point cloud 710b acquired from a second sensing device 120b determined as a target sensing device to be corrected. A user may select at least two second reference points 901b and 903b from the second point cloud 710b through an input device 117. For example, a user may select the positions of at least two landmarks from the second point cloud 710b as at least two second reference points 901b and 903b, or may select at least two second reference points 901b and 903b based on a terrain feature having a unique shape from the second point cloud 710b. That is, the processor 111 may select at least two second reference points 901b and 903b from the second point cloud 710b based on the user input. Here, the at least two second reference points 901b and 903b may be points corresponding to at least two first reference points 801a and 803a selected from the first point cloud.

Again, going back to FIG. 6, the processor 111 according to various embodiments may, at operation 670, align at least two first reference points and at least two second reference points based on a predetermined point in time. The processor 111 may align at least two first reference points and at least two second reference points based on a predetermined point in time by rotating or translating the second point cloud around three rotation axes that are orthogonal to each other based on the first point cloud. Specifically, the processor 111 may rotate the second point cloud, which is the correction target data, so that the at least two first reference points and the at least two second reference points may be arranged on the same plane at the predetermined point in time. The processor 111 may perform pitch, yaw, and/or roll rotations with respect to the second point cloud based on the first point cloud. Thereafter, the second point cloud may be translated so that at least two first reference points and at least two second reference points arranged on the same plane are aligned.

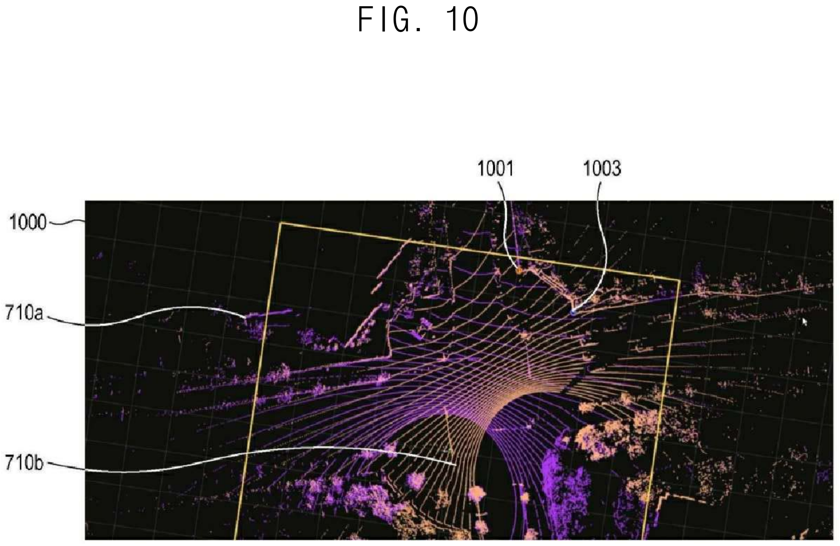

The processor 111 according to various embodiments may align the first point cloud and the second point cloud at operation 680. The processor 111 may align the first point cloud and the second point cloud based on the aligned at least two first reference points and at least two second reference points. FIG. 10 is a drawing illustrating the first point cloud 710a and the second point cloud 710b after alignment. Compared with FIG. 7 to FIG. 9, it may be confirmed that the first point cloud 710a and the second point cloud 710b are accurately aligned with at least two first reference points 801a and 803a and at least two second reference points 901b and 903b (see reference points 1001 and 1003).

According to the above-described method, the user only needs to select at least two points corresponding to each other in the first point cloud 710a and the second point cloud 710b to align the two point clouds.

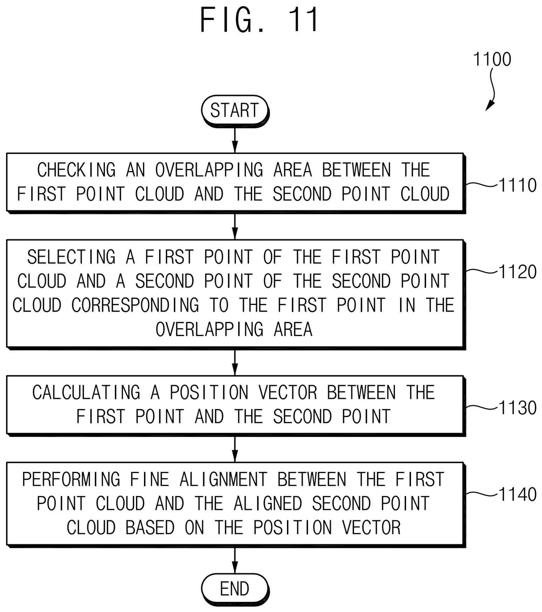

FIG. 11 is a flowchart of an example operation of the electronic device. Specifically, FIG. 11 is a flow chart of operations regarding fine tuning, one of two adjustments included in a 3D point cloud alignment method performed in an electronic device 110. The fine tuning illustrated in FIG. 11 may be performed after the reference point adjustment illustrated in FIG. 4 and FIG. 6 is performed, or may be performed without reference point adjustment.

The processor 111 of the electronic device 110 according to various embodiments may, in operation 1110, check the overlapping area between the first point cloud and the second point cloud. If the reference point adjustment between the first point cloud and the second point cloud is performed, the processor 111 may check the overlapping area between the first point cloud and the aligned second point cloud.

The processor 111 according to various embodiments may determine a first point of a first point cloud in an overlapping area at operation 1120. The processor 111 according to various embodiments may determine a second point of a second point cloud corresponding to the first point at operation 1130. Here, the distance between the first point and the second point may be shorter than a predetermined distance. That is, two points having a distance shorter than the predetermined distance may be utilized for fine alignment between the two point clouds, and points having a distance longer than the predetermined distance may not be utilized for fine alignment between the two point clouds. The processor 111 according to various embodiments may calculate a position vector between the first point and the second point at operation 1140. For example, the processor 111 may calculate a position vector from the first point of the first point cloud to the second point of the first point cloud. The processor 111 may calculate a position vector between the first point and the second point based on the position coordinates of the first point and the position coordinates of the second point in the three-dimensional space coordinate system. The processor 111 may determine that the two point clouds are separated in the direction in which the position vector is directed by a distance corresponding to the position vector.

The processor 111 according to various embodiments may perform fine alignment between the first point cloud and the second point cloud based on the position vector in operation 1150. The processor 111 may move the first point cloud in the direction of the position vector by the size of the position vector in order to narrow the distance between the two point clouds. Alternatively, the processor 111 may move the second point cloud in the opposite direction of the position vector by the size of the position vector. That is, two points having a distance shorter than a predetermined distance may be paired to perform fine alignment between the two point clouds. Through the above-described process, the fine distance difference between the two point clouds may also be reduced.

As described above, through the reference point alignment and/or fine alignment, the user may easily and quickly align two point clouds. Furthermore, since the alignment may be performed between point clouds without a pre-mapping process, waste of computational resources and computational time may be reduced.

Although the process steps, method steps, algorithms, etc. are described in a sequential order in the flow charts illustrated in the drawings, such processes, methods, and algorithms may be configured to operate in any suitable order. In other words, the steps of the processes, methods, and algorithms described in various embodiments of the present disclosure need not be performed in the order described in the present disclosure. Furthermore, even if some steps are described as being performed asynchronously, in other embodiments, such some steps may be performed concurrently. Furthermore, the illustration of a process by depiction in the drawings does not imply that the illustrated process excludes other changes and modifications thereto, nor does it imply that any of the illustrated process or its steps is essential to one or more of the various embodiments of the present disclosure, nor does it imply that the illustrated process is preferred.

Although the technical features of the present disclosure have been described by the above-described embodiments and examples illustrated in the attached drawings, it should be understood that various substitutions, modifications, and changes may be made without departing from the technical scope of the present disclosure as understood by those skilled in the art to which the present disclosure pertains. In addition, such substitutions, modifications, and changes should be considered to fall within the scope of the appended claims. Although the above-described method has been described through specific embodiments, the method may also be implemented as computer-readable code on a computer-readable recording medium. A computer-readable recording medium includes all kinds of recording devices that store data that may be read by a computer system. Examples of computer-readable recording media may include ROMs, RAMs, CD-ROMs, magnetic tapes, floppy disks, optical data storage devices, etc. In addition, the computer-readable recording medium may be distributed over network-connected computer systems, so that the computer-readable code may be stored and executed in a distributed manner. And, functional programs, codes and code segments for implementing the above embodiments may be easily inferred by programmers in the technical field to which the present disclosure belongs.

## Claims

1. An electronic device comprising:
a communication circuit configured to communicate with a sensing device;
an input device;
at least one processor; and
at least one memory,
wherein when the at least on memory is operated, the at least one processor stores instructions, wherein the instructions are configured to:
obtain a first point cloud for a three-dimensional space from a first sensing device among a plurality of sensing devices,
obtain a second point cloud for the three-dimensional space from a second sensing device among the plurality of sensing devices,
select at least two first reference points from the first point cloud based on a user input,
select at least two second reference points from the second point cloud based on the user input, and
align the first point cloud and the second point cloud based on the at least two first reference points and the at least two second reference points.

2. The electronic device of claim 1, wherein the instructions are configured to cause the one or more processors to:
align the at least two first reference points and the at least two second reference points based on a predetermined point in time, and
align the first point cloud and the second point cloud based on the aligned at least two first reference points and the at least two second reference points.

3. The electronic device of claim 2, wherein the instructions are configured to cause the one or more processors to:
based on user input, determine the first sensing device as a reference sensing device and the second sensing device as a target sensing device to be corrected, and
align the at least two first reference points and the at least two second reference points based on a predetermined point in time by rotating or translating the second point cloud about three mutually orthogonal rotation axes based on the first point cloud.

4. The electronic device of claim 3, wherein the instructions are configured to cause the one or more processors to:
determine an overlap area between the first point cloud and the aligned second point cloud,
determine a first point of the first point cloud and a second point of the second point cloud corresponding to the first point in the overlap area, wherein a distance between the first point and the second point is shorter than a predetermined distance,
calculate a position vector between the first point and the second point, and
perform fine alignment between the first point cloud and the aligned second point cloud based on the position vector.

5. The electronic device of claim 4, wherein the instructions are configured to cause the one or more processors to:
calculate a position vector between the first point and the second point based on the position coordinates of the first point and the position coordinates of the second point in a three-dimensional space coordinate system.

6. The electronic device of claim 1, wherein at least two landmarks are placed in the three-dimensional space,
wherein the instructions are configured to cause the one or more processors to:
select locations of the at least two landmarks included in the first point cloud as the at least two first reference points, and
select locations of the at least two landmarks included in the second point cloud as the at least two second reference points.

7. The electronic device of claim 6, wherein each of the above at least two landmarks is an object or a portion of the object.

8. The electronic device of claim 1, wherein each of the sensing devices includes a Lidar sensor capable of obtaining a point cloud for the three-dimensional space.

9. The electronic device of claim 1, further comprising a display,
wherein the instructions are configured to cause the one or more processors to display the first point cloud and the second point cloud through the display.

10. The electronic device of claim 6, further comprising a display,
wherein the instructions are configured to cause the one or more processors to display the aligned first point cloud and the second point cloud through the display, in response to completion of alignment of the first point cloud and the second point cloud.

11. A method for aligning a point cloud to a three-dimensional space of an electronic device, the method comprising:
obtaining a first point cloud for the three-dimensional space from a first sensing device among a plurality of sensing devices;
obtaining a second point cloud for the three-dimensional space from a second sensing device among the plurality of sensing devices;
selecting at least two first reference points from the first point cloud based on a user input;
selecting at least two second reference points corresponding to the at least two first reference points selected from the first point cloud from the second point cloud based on a user input; and
aligning the first point cloud and the second point cloud based on the at least two first reference points and the at least two second reference points.

12. The method of claim 11, wherein the aligning comprises:
aligning the at least two first reference points and the at least two second reference points based on a predetermined point in time; and
aligning the first point cloud and the second point cloud based on the aligned at least two first reference points and the at least two second reference points.

13. The method of claim 12, further comprising:
determining the first sensing device as a reference sensing device and the second sensing device as a target sensing device to be compensated based on user input is performed, after acquiring the second point cloud,
wherein the aligning further comprises:
aligning at least two first reference points and at least two second reference points at a predetermined point in time by rotating or translating the second point cloud around three mutually orthogonal rotation axes based on the first point cloud.

14. The method of claim 13, wherein the aligning further comprises:
checking an overlapping area between the first point cloud and the aligned second point cloud;
selecting a first point of the first point cloud and a second point of the second point cloud corresponding to the first point in the overlapping area, wherein a distance between the first point and the second point is shorter than a predetermined distance;
calculating a position vector between the first point and the second point; and
performing fine alignment between the first point cloud and the aligned second point cloud based on the position vector.

15. The method of claim 14, wherein the calculation comprises:
calculating a position vector between the first point and the second point based on the position coordinates of the first point and the position coordinates of the second point in a three-dimensional space coordinate system.

16. The method of claim 11, wherein at least two landmarks are arranged in the three-dimensional space,
wherein the selecting the at least two first reference points is selecting the positions of the at least two landmarks included in the first point cloud as the at least two first reference points,
wherein the selecting the at least two second reference points is selecting the positions of the at least two landmarks included in the second point cloud as the at least two second reference points.

17. The method of claim 16, wherein each of the at least two landmarks is an object or a portion of the object.

18. The method of claim 11, wherein each of the sensing devices includes a Lidar sensor capable of obtaining a point cloud for the three-dimensional space.

19. The method of claim 11, further comprising:
displaying the first point cloud and the second point cloud through a display.

20. The method of claim 11, further comprising:
displaying the aligned first point cloud and the second point cloud through a display, in response to the completion of the alignment of the first point cloud and the second point cloud.
